# EUROPÄISCHE PATENTSCHRIFT

(11) **EP 1 010 902 B1**
(45) Veröffentlichungstag und Bekanntmachung des Hinweises auf die Patenterteilung: **21.07.2004**
(21) Anmeldenummer: 99121214.3
(22) Anmeldetag: 23.10.1999
(51) Int. Cl.: F16C 9/04, F16C 33/12

(54) **Kurbelwellen- oder Pleuellagerschale**
Crankshaft or connecting-rod bearing cup
Coquille de coussinet pour vilebrequins ou bielles

(30) Priorität: 15.12.1998 DE 19857757
(43) Veröffentlichungstag der Anmeldung: 21.06.2000
(73) Patentinhaber: KS Gleitlager GmbH, 68789 St. Leon-Rot (DE)
(72) Erfinder: Schubert, Werner, 69169 Wiesloch (DE); Becker, Karl, 68789 St. Leon-Rot (DE)
(74) Vertreter: Dreiss, Fuhlendorf, Steimle & Becker

(56) Entgegenhaltungen:
- EP-A- 0 394 518
- DE-A- 4 038 819
- US-A- 4 590 657
- US-A- 5 686 176

## Beschreibung

Die Erfindung betrifft eine Kurbelwellen- oder Pleuellagerschale aus einem Metallverbundgleitlagerwerkstoff mit einem metallischen Träger und einer gegebenenfalls unter Zwischenordnung einer metallischen Haftschicht auf den Träger aufgebrachten Gleitschicht aus metallischer Lagerlegierung.

Derartige Lagerschalen sind bekannt. Beispielsweise ist aus der DE 40 38 819 C2 eine gattungsgemässe Lagerschale bekannt, die aus einem Metallverbundgleitlagerwerk stoff mit einem Träger aus rostfreiem Stahl und einer auf den Träger aufgebrachten Gleitschicht aus einer Blei-Bronze-Legierung besteht. Da es sich nicht vermeiden lässt, dass zwischen den Lagerschalen und der inneren Wandung des großen Pleuelauges bzw. der Lageröffnung des Kurbelgehäuses geringste Relativbewegungen im Mikrometerbereich auftreten, mußte zwischen Schale und Lagerwandung seither das Auftreten von sogenanntem Passungsrost hingenommen werden.

Es ist die Aufgabe der vorliegenden Erfindung, dem Auftreten von Passungsrost entgegenzuwirken.

Diese Aufgabe wird bei einer Lagerschale der genannten Art erfindungsgemäß dadurch gelöst, dass auf der von der Gleitschicht abgewandten Außenseite des Trägers eine Schicht aus PFA (Perfluoralkoxy-Polymere) vorgesehen ist. Die Schicht aus PFA ist vorzugsweise durch Anschmelzen des PFA bei 360 - 380° C auf die Außenseite des Trägers aufgeklebt.

Es hat sich gezeigt, dass hierdurch dem vorstehend beschriebenen Problem wirksam begegnet werden kann. Besonders gute Resultate werden erzielt, wenn die Schicht aus PFA eine Dicke von 10 - 50 µm, vorzugsweise von 15 - 30 µm aufweist.

Als ganz besonders vorteilhaft erweist sich die auf die Außenseite des Trägers aufgebrachte Schicht aus PFA bei Lagerschalen, deren Gleitschicht noch mit einer weiteren galvanisch aufgebrachten Gleitschicht überzogen ist. Diese weitere galvanisch aufgebrachte Gleitschicht ist nämlich ausschließlich auf der radial inneren Lagerschicht erwünscht, nicht jedoch auf dem Lagerrücken, also auf der Außenseite des Trägers. Es ist daher erforderlich, vor dem Einbringen der Lagerschalen in ein Galvanisierungsbad den Rücken der Lagerschalen aufwendig zu kaschieren, um eine Materialabscheidung zu verhindern. Dies ist nach der erfindungsgemäßen Beschichtung des Rückens der Lagerschalen mit einer Schicht aus PFA nicht mehr erforderlich, was sich in herstellungstechnischer Hinsicht als besonders vorteilhaft auswirkt.

Es wurde des Weiteren festgestellt, dass eine auf den Rücken der Lagerschale aufgebrachte Schicht aus PFA hervorragende Geräuschdämpfungseigenschaften aufweist und einer Körperschallanregung und -übermittlung entgegenwirkt.

Weitere Einzelheiten der Erfindung ergeben sich aus der zeichnerischen Darstellung und nachfolgenden Beschreibung zweier bevorzugter Ausführungsformen einer erfindungsgemäßen Kurbelwellen- oder Pleuellagerschale. In der Zeichnung zeigen:
- Fig. 1:: eine schematische Schnittansicht einer ersten Ausführungsform einer erfindungsgemäßan Kurbelwellen- oder Pleuellagerschale und
- Fig. 2:: eine zweite Ausführungsform einer erfindungsgemäßen Kurbelwellen- oder Pleuellagerschale.

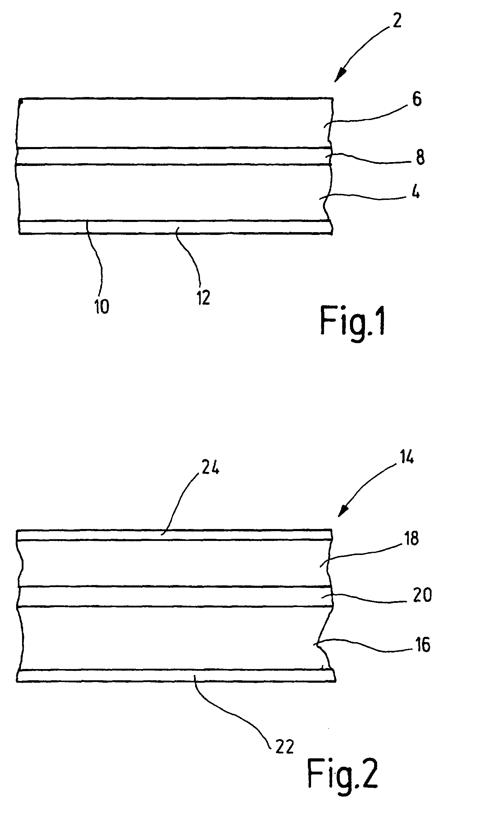

Fig. 1 zeigt in schematischer und nicht maßstabsgetreuer Dartellung eine Schnittansicht einer erfindungsgemäßen Kurbelwellen- oder Pleuellagerschale 2. Die Lagerschale 2 umfaßt eine Trägerschicht 4 und eine Gleitschicht 6 aus Aluminiumlagerlegierung AlSn20. Zwischen dem Träger 4 und der Gleitschicht 6 ist eine Schicht 8 aus Reinaluminium als Haftvermittlungsschicht vorgesehen. Auf der von dem Gleitpartner (Kurbelwelle) abgewandten Außenseite 10 der Lagerschale ist eine Schicht 12 aus PFA durch kurzzeitiges Anschmelzen des PFA bei Temperaturen von 360 - 380° C aufgeklebt. Diese PFA-Schicht steht in unmittelbarem Kontakt zu der inneren Wandung des großen Pleuelauges bzw. der Lageröffnung im Kurbelgehäuse. Es wurde festgestellt, das hierdurch das Aufteten von Reibkorrosion und damit Passungsrost zwischen dem Lagerrücken, also der äußeren Oberfläche 10 der Trägerschicht 4, und der Lageröffnung weitgehend vermieden werden kann. Außerdem dient die PFA-Schicht zur Körperschallentkopplung und verringert die Körperschallaussendung.

Figur 2 zeigt eine zweite Ausführungsform einer erfindungsgemäßen Kurbelwellen- oder Pleuellagerschale 14.

Sie umfaßt wiederum einen Träger 16 aus Stahl, auf den unter Zwischenordnung einer metallischen Haftschicht 20 eine Gleitschicht 18 aus Kupfer/Blei/Zinn-Lagerlegierung aufgebracht ist. Die Gleitschicht 18 ist mit einer weiteren galvanisch aufgebrachten Gleitschicht 24 überzogen. Wiederum ist auf der von der Gleitschicht 18, 24 abgewandten Außenseite des Trägers 16 eine Schicht 22 aus PFA vorgesehen.

## Patentansprüche

1. Kurbelwellen- oder Pleuellagerschale (2, 14) aus einem Metallverbundgleitlagerwerkstoff mit einem metallischen Träger (4, 16) und einer auf den Träger (4, 16) aufgebrachten Gleitschicht (6, 18) aus metallischer Lagerlegierung,
**dadurch gekennzeichnet, dass** auf der von der Gleitschicht (6, 18) abgewandten Außenseite (10) des Trägers (4, 16) eine Schicht (12, 22) aus PFA vorgesehen ist.

2. Kurbelwellen- oder Pleuellagerschale (2, 14) nach Anspruch 1, **dadurch gekennzeichnet, dass** die Schicht (12, 22) aus PFA durch Anschmelzen des PFA auf die Außenseite (10) des Trägers (4, 16) aufgeklebt ist.

3. Kurbelwellen- oder Pleuellagerschale (2, 14) nach Anspruch 1 oder 2, **dadurch gekennzeichnet, dass** die Schicht (12, 22) aus PFA eine Dicke von 10 - 50 µm aufweist.

4. Kurbelwellen- oder Pleuellagerschale (2, 14) nach einem der vorhergehenden Ansprüche, **dadurch gekennzeichnet, dass** die Schicht (12, 22) aus PFA eine Dicke von 15 - 30 µm aufweist.

5. Kurbelwellen- oder Pleuellagerschale (2, 14) nach einem der vorhergehenden Ansprüche, **dadurch gekennzeichnet, dass** der Träger (4, 16) aus Stahl besteht.

6. Kurbelwellen- oder Pleuellagerschale (2, 14) nach einem der vorhergehenden Ansprüche, **dadurch gekennzeichnet, dass** die metallische Gleitschicht (6) eine Aluminium/Zinn- oder Aluminium/Zinn/Kupfer-Lagerlegierung ist.

7. Kurbelwellen- oder Pleuellagerschale (2, 14) nach einem der vorhergehenden Ansprüche 1 bis 5, **dadurch gekennzeichnet, dass** die metallische Gleitschicht (18) eine Kupfer/Blei/Zinn-Lagerlegierung ist.

8. Kurbelwellen- oder Pleuellagerschale (2, 14) nach einem der vorhergehenden Ansprüche, **dadurch gekennzeichnet, dass** die Gleitschicht (18) mit einer galvanisch aufgebrachten weiteren Gleitschicht (24) überzogen ist.

9. Kurbelwellen- oder Pleuellagerschale (2, 14) nach Anspruch 8, **dadurch gekennzeichnet, dass** die galvanisch aufgebrachte weitere Gleitschicht (24) auf Blei/Zinn/Kupfer-Basis mit 80 bis 90 Masse-% Kupfer hergestellt ist.

## Claims

1. A bearing shell (2, 14) for a crank shaft or connecting rod, made from a metal composite bearing bush material and having a metal support (4, 16) and a liner (6, 18) mounted on the support (4, 16) and made from metal bearing alloy,
**characterised in that** a layer (12, 22) of PFA is provided on the outer side (10) of the support (4, 16), remote from the liner (6, 18).

2. A bearing shell (2, 14) for a crank shaft or connecting rod according to Claim 1, **characterised in that** the layer (12, 22) of PFA is made to adhere to the outer side (10) of the support (4, 16) by causing the PFA to begin to melt.

3. A bearing shell (2, 14) for a crank shaft or connecting rod according to Claim 1 or 2, **characterised in that** the layer (12, 22) of PFA is 10 - 50 µm thick.

4. A bearing shell (2, 14) for a crank shaft or connecting rod according to one of the preceding claims, **characterised in that** the layer (12, 22) of PFA is 15 - 30 µm thick.

5. A bearing shell (2, 14) for a crank shaft or connecting rod according to one of the preceding claims, **characterised in that** the support (4, 16) is made from steel.

6. A bearing shell (2, 14) for a crank shaft or connecting rod according to one of the preceding claims, **characterised in that** the metal liner (6) is an aluminium/tin or aluminium/tin/copper bearing alloy.

7. A bearing shell (2, 14) for a crank shaft or connecting rod according to one of preceding Claims 1 to 5, **characterised in that** the metal liner (18) is a copper/lead/tin bearing alloy.

8. A bearing shell (2, 14) for a crank shaft or connecting rod according to one of the preceding claims, **characterised in that** the liner (18) is coated with a further liner (24) applied by electroplating.

9. A bearing shell (2, 14) for a crank shaft or connecting rod according to Claim 8, **characterised in that** the further liner (24) applied by electroplating is based on lead/tin/copper and comprises 80 to 90% copper by mass.

## Revendications

1. Coquille de coussinet pour vilebrequins ou bielles (2, 14) en matériau composite métallique pour palier lisse avec un support métallique (4, 16) et, rapportée sur le support (4, 16), une couche de glissement (6, 18) en alliage métallique pour palier lisse, **caractérisée en ce qu'**une couche (12, 22) de PFA est prévue sur la face externe (10) du support (4, 16) qui est située à l'opposé de la couche de glissement (6, 18).

2. Coquille de coussinet pour vilebrequins ou bielles (2, 14) selon la revendication 1, **caractérisée en ce que** la couche (12, 22) en PFA est rapportée par fusion en surface du PFA sur la face externe (10) du support (4, 16).

3. Coquille de coussinet pour vilebrequins ou bielles (2, 14) selon la revendication 1 ou la revendication 2, **caractérisée en ce que** la couche (12, 22) en PFA présente une épaisseur de 10 à 50 µm.

4. Coquille de coussinet pour vilebrequins ou bielles (2, 14), selon l'une quelconque des revendications précédentes, **caractérisée en ce que** la couche (12, 22) en PFA présente une épaisseur de 15 à 30 µm.

5. Coquille de coussinet pour vilebrequins ou bielles (2, 14) selon l'une quelconque des revendications précédentes, **caractérisée en ce que** le support (4, 16) est en acier.

6. Coquille de coussinet pour vilebrequins ou bielles (2, 14) selon l'une quelconque des revendications précédentes, **caractérisée en ce que** la couche de glissement métallique (6) est en alliage aluminium/étain ou aluminium/étain/cuivre.

7. Coquille de coussinet pour vilebrequins ou bielles (2, 14) selon l'une quelconque des revendications 1 à 5, **caractérisée en ce que** la couche de glissement métallique (18) est en alliage cuivre/plomb/étain.

8. Coquille de coussinet pour vilebrequins ou bielles (2, 14) selon l'une quelconque des revendications précédentes, **caractérisée en ce que** la couche de glissement (18) est revêtue d'une couche de glissement supplémentaire (24) déposée par voie électrolytique.

9. Coquille de coussinet pour vilebrequins ou bielles (2, 14) selon la revendication 8, **caractérisée en ce que** la couche de glissement supplémentaire déposée par voie électrolytique (24) est à base de plomb/étain/cuivre, avec 80 à 90 % en masse de cuivre.
